# EUROPEAN PATENT APPLICATION

(11) **EP 4 588 737 A1**
(43) Date of publication of application: **23.07.2025**
(21) Application number: 25151961.7
(22) Date of filing: 15.01.2025
(51) Int. Cl.: B60T 13/74, B60T 11/04

(54) **ACTUATOR SYSTEM**

(30) Priority: 16.01.2024 IT 202400000681
(71) Applicant: FINAN.CO. S.r.l, 20871 Vimercate (MB) (IT)
(72) Inventor: Barbieri, Walter, I-24040 Filago (BG) (IT); Plebani, Alessandro, I-24036 Ponte San Pietro (BG) (IT)
(74) Representative: Dragotti & Associati S.R.L.

(57) **Abstract**

An actuator system, for example for controlling a parking brake of a motor vehicle, such as an agricultural vehicle, comprises a housing (20) containing an electric motor (21) and a reducer group (22) connected downstream of the electric motor (21), a hollow shaft (41) connected to the reducer group and displaceable longitudinally inside said housing (20) and, for example, a cable (54) to be operated, which is connected to the hollow shaft (41). The system also comprises a position sensor (52), which is located fixed inside the housing (20) and arranged facing said hollow shaft (41) for measuring a displacement of said hollow shaft (41).

## Description

The present invention relates to an actuator system of the pulling type, for example for controlling the parking brake of a motor vehicle, such as an agricultural vehicle.

In actuator systems of the pulling type it is often difficult to obtain and maintain the correct pulling position.

In particular, in the application sector of parking brake actuators for motor vehicle, electric motor actuating systems are now widely used, these replacing manually operated lever brakes. These devices are called parking brakes by the persons skilled in the art and are widely used in motor vehicles, such as agricultural vehicles or the like.

These parking brakes use cables actuated with the aid of an electric motor and reducer group which is operated by the driver and/or by the user of the vehicle by pressing a simple pushbutton.

In fact, these types of brake are incorporated in the electrical/electronic controls which are located on-board the more modern motor vehicles and form part of all the accessories provided.

Moreover, at present this type of actuator system consists of a large number of components, is complex and costly to manufacture and is also difficult to assemble owing to the size thereof.

The assembly thereof requires a high degree of precision with regard to the connection of the parts and functional relationship between them. Moreover, these systems are subject to an increasing number of requirements in terms of resistance to impacts, vibrations, corrosion and high temperatures. In all the operating conditions, the mechanical resistance of the transmission should be as constant as possible in order to be able to provide reproducible locking forces.

The known actuating groups do not always have a good mechanical performance and on occasions are subject to play which affects correct operation thereof, without the possibility of permanent control over the arrangement of the component parts.

In particular, at the moment it is not possible to determine immediately whether a pull cable of the actuator system, for example for operating a brake, has the required tension for correct operation thereof, or whether it may even be accidentally broken.

The general object of the present invention is to provide an actuator system, for example for controlling the parking brake of a motor vehicle, such as an agricultural vehicle, which is able to overcome the aforementioned drawbacks of the prior art in an extremely simple, low-cost and particularly functional manner.

Another object of the present invention is to provide an actuator system, for example for controlling a parking brake of a motor vehicle, such as an agricultural vehicle, which is particularly compact, has a simple structure, with a small number of parts and limited manufacturing costs.

Another object of the present invention is to provide an actuator system for controlling a cable to be operated, for example for a parking brake of a motor vehicle, such as an agricultural vehicle, which can be applied in a simple manner to any type of vehicle, which guarantees a certain degree of uniformity and reliability in terms of its operation, being able to signal any problem affecting the pull cable or malfunctioning thereof.

The aforementioned objects are achieved with an actuator system provided in accordance with the independent claims and the subclaims below.

The structural and functional characteristics of the present invention and its advantages compared to the prior art will become even more clear and obvious from a reading of the following description, with reference to the attached drawings, which show an example of embodiment of said invention. In the drawings:

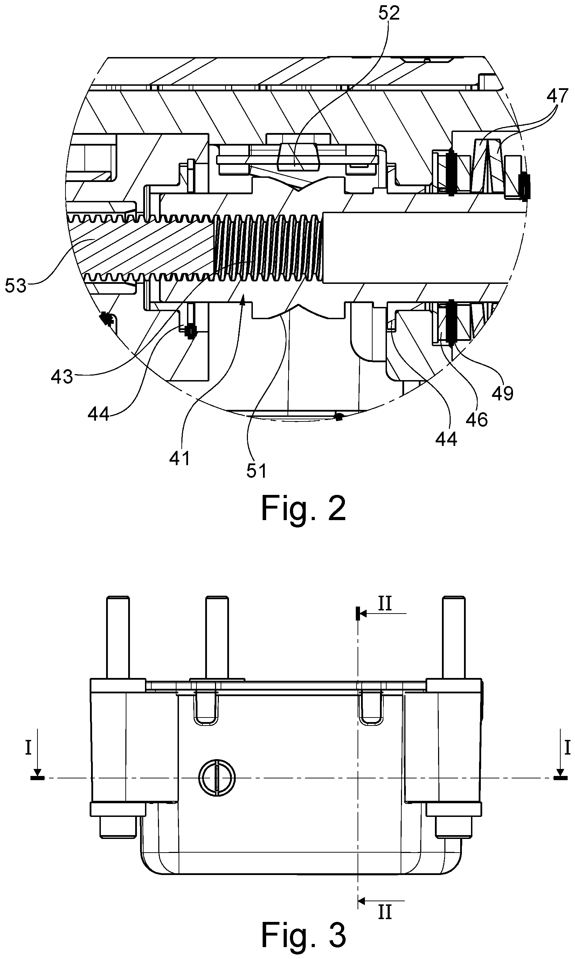

- Figure 1 shows a longitudinally sectioned side view of an actuator system, for example for controlling a parking brake of a motor vehicle, such as an agricultural vehicle, in an embodiment according to the invention, where said cross-section is along the line I-I shown in Figure 3;
- Figure 2 shows an enlarged cross-sectional detail along the line II-II of Figure 3, in which the sensor and the shaped cam surface can be seen;
- Figure 3 is a side elevation view, along the line III-III of Figure 1, of the system according to the invention;
- Figure 4 is an enlarged detail of that shown in Figure 1 with the system in the rest position;
- Figure 5 also shows an enlarged detail of that shown in Figure 1 in an operating condition of the system;
- Figure 6 shows a plan view of the actuator system shown in Figure 1 in the closed condition; and
- Figure 7 shows a cross-sectional view along the line VII-VII of Figure 6 which shows the coupled arrangement of the shaped bush and a hollow shaft.

In the following description, for illustration of the figures, identical reference numbers are used to indicate constructional elements with the same function. Moreover, for clearer illustration, some reference numbers may not have been repeated in all the figures.

Indications such as "vertical" and "horizontal", "top" or "upper" and "bottom" or "lower" (if not otherwise indicated) must be read with reference to the assembled (or operational) conditions and with reference to the normal terminology in use in everyday language, where "vertical" indicates a direction substantially parallel to that of the gravitational force vector "g" and horizontal a direction perpendicular thereto.

With reference to the figures, provided by way of non-limiting examples, these show a non-limiting example of embodiment of an actuator system, for example for controlling a parking brake of a motor vehicle, such as an agricultural vehicle, according to the present invention.

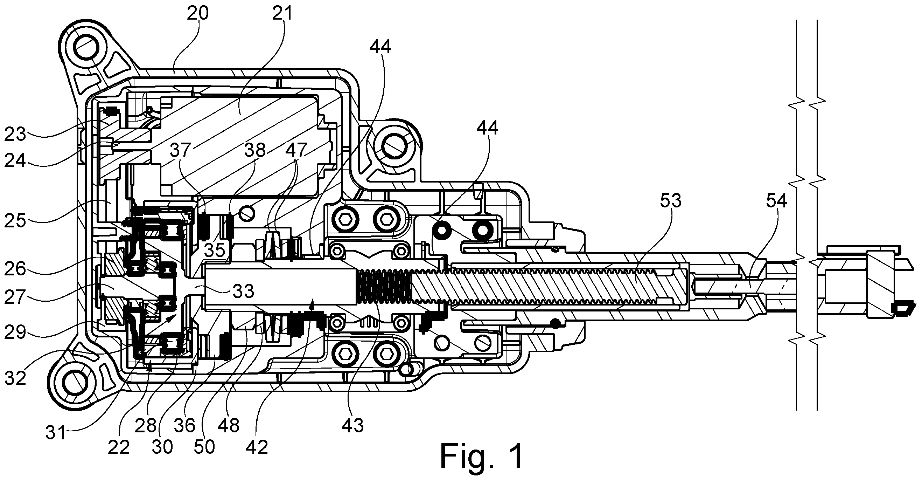

In particular Figure 1 shows a housing or casing 20 consisting of two halves (only one of which is shown) inside which the system according to the present invention is arranged. More precisely, a part of this housing 20 contains an electric motor 21 which generally, once a command has been received from a central control unit (for example in a vehicle such as a motor car or an agricultural vehicle), actuates a compact cycloidal reducer group 22. In particular a drive pulley 23, keyed onto a drive shaft 24 of the electric motor 21, is provided. The drive pulley 23 transfers the rotational movement via a toothed belt 25 to a toothed pulley 26 arranged keyed onto an input shaft 27 entering the compact cycloidal reducer 22.

In the example a toothed belt is provided as movement take-up element, but alternatively a chain and associated pulley or a series of gearwheels could be provided.

Preferably, such a compact cycloidal reducer 22 is of the type forming the subject of Italian patent application No. 102023000015114 dated 19.07.2023 in the name of the same Applicant, but it could also be a gear-type or other type of epicycloidal reducer.

Said compact reducer 22 comprises an upper cover 29 and a lower cover 30 which contain the various parts of the reducer or the cycloidal group.

In particular, the lower cover 30 houses inside a cup-shaped seat 28 thereof a guide bearing 31 for a disc arrangement 32. A shaft extension 33 extends from said disc arrangement 32 at the bottom towards the lower cover 30, passing inside it, and this shaft extension 33 forms an output shaft of the reducer group 22.

The shaft extension 33, which is shaped externally with a longitudinal toothed profile, in the form of a grooved bar, is housed inside a central hole 34, shaped in a matching manner with an internal toothed profile, of a shaped bush 35 which has a radial annular extension 36 with respect to the axis. This annular extension 36 is arranged rotatably between needle-roller bearings 37 arranged in seats inside the housing 20. Alternatively, these bearings 37 could be replaced by anti-friction bushes. Both the bearings and the anti-friction bushes could be arranged either in the same position shown in the figures or, in addition, also on the other side of the annular extension 36 so as surround it, as indicated by the dot-dash line 38.

A first hollow end of a hollow shaft 41 is positioned axially slidably inside a blind circular recess 39 of the shaped bush 35, which is coaxial with the central hole 34 and is provided with two flat surfaces 40. This first end is provided with a pair of flat surfaces 42 matching the flat surfaces 40 of the recess 39 against which they abut.

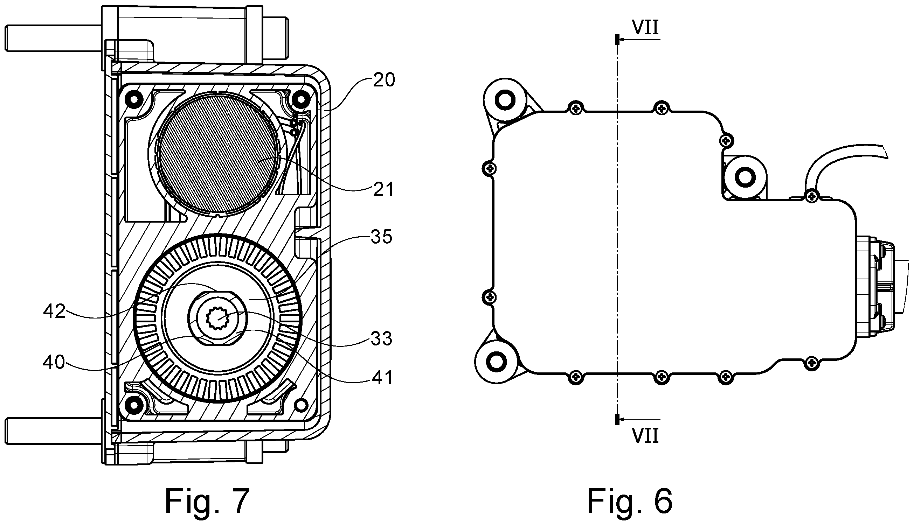

Figure 7 shows a cross-sectional view along the line VII-VII of Figure 6 which shows the coupled arrangement between the flat surfaces 40 of the shaped bush 35 and flat surfaces 42 of the hollow shaft 41.

Furthermore the hollow shaft 41 has an internal portion of the other end provided with a female threading 43.

This hollow shaft 41 is also axially supported externally by a pair of flanged bushes 44 arranged inside this housing 20. The hollow shaft 41 is also externally supported rotationally by an axial needle-roller bearing 46 which has the function of supporting the axial load generated by the pulling action of the cable.

On the outside of the hollow shaft 41 oppositely arranged Belleville springs 47 are provided, situated in a zone between a pair of washers 48, 49. A nut 50 completes the arrangement of parts around the hollow shaft 41, being situated on an outer threaded portion thereof and forming a locating element for the positioning of the washers 48, 49 and the Belleville springs 47.

It must also be emphasized how an outer section of the shaft 40 has a cam-shaped surface with a central open V shaped recess 51 which extends annularly around it and which faces a position sensor 52 located fixed inside the housing 20. Preferably, the hollow shaft 41 is made of ferromagnetic material so as to be able to cooperate with the position sensor 52.

The female-threaded end 43 of the hollow shaft 40 receives a screw 53 which is connected and fixed to one end of a pull cable 54 to be operated. The cable 54 is for example the operating cable of a brake. For example, in a non-limiting embodiment, the cable 54 may be a Bowden cable. A square head 55 forms part of the screw 53 and, engaging inside a sleeve 56 with a matching cross-section, prevents rotation of the screw 53 (anti-rotation function).

The arrangement of the cam-shaped surface with the central open V shaped recess 51 of the ferromagnetic shaft 41 extends annularly around the latter and faces a position sensor 52. The position sensor 52 detects the axial displacement of the hollow shaft 41 provided with a female thread 43 due to the axial load acting on the screw 53.

The displacement of the hollow shaft 41, namely of the cam-shaped surface 51, with respect to the position sensor 52, is proportional in accordance with the law of deformation of Belleville springs 47.

The control system according to the present invention also comprises electronic circuitry, or a control board (not shown), which is connected to the position sensor 52 and to the electric motor 21. As will become clearer below, said control board is configured to activate and deactivate selectively the electric motor 21 both following a command imparted by an operator and on the basis of the detection data obtained by the position sensor 52.

In general, the system according to the invention is controlled by means of a pushbutton, or the like, arranged on the vehicle and connected to the control board.

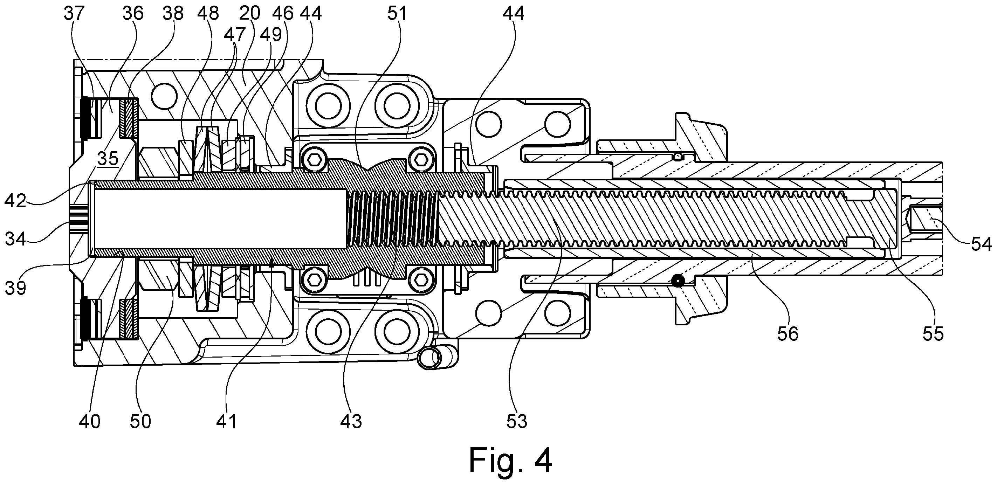

During use, in a rest position shown in Figure 4, the Belleville springs 47 are not stressed (Figure 4), being arranged abutting in between the two washers 48, 49, and keep the cable 54 tensioned in the rest position (for example with the brake not operated).

When the pushbutton is pressed, the system is activated (for example the brake is activated), namely the motor 21 is operated until the position sensor 52 signals to the control board that a required position/tension of the cable (or action of the brake) has been reached. In the example the nominal tension to be reached is 4000 N.

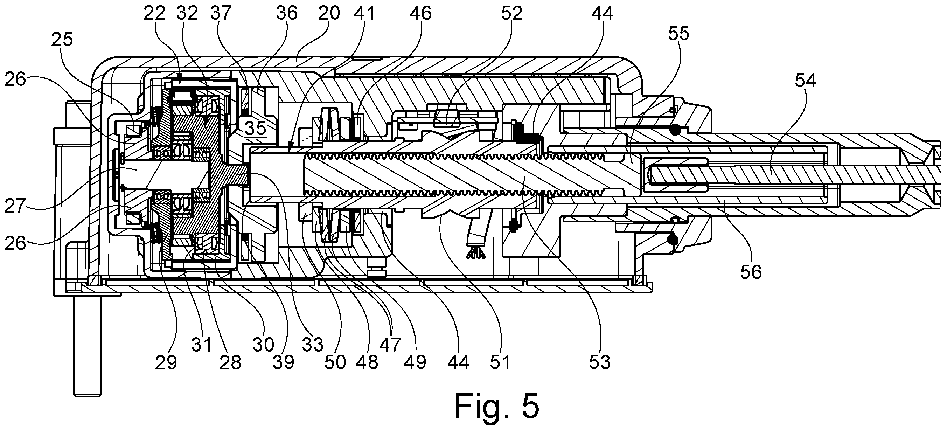

In order to reach the operating position (for example brake pulled position) shown in Figure 5 with the correct pulling (braking) load, the Belleville springs 47 are compressed and the hollow shaft 41 is displaced by an amount proportional to the load which is applied to the cable 54.

Owing to this configuration, the control board may determine how much force is being applied to the cable 54.

When the system is deactivated by pressing the said pushbutton, the motor 21 must rotate in the opposite direction until zero load is reached, and then for a further given amount of time, and the shaped cam surface 51 of the ferromagnetic shaft 41 is arranged in the rest position, as shown in Figure 1. The whole assembly is brought back into the correct rest position owing to the presence and the action of the Belleville springs 47. In brief, by activating the system, a rotation of the female thread 43 is obtained and this generates a displacement of the screw 53 to which the cable 54 is directly connected. This displacement of the screw 53 generates a tension on the cable 54. This tension causes compression of the springs 47 in a manner proportional to the law governing the loading of springs. The compression of the springs 47 (such as that shown in Figure 5) allows displacement of the hollow shaft 41 which is proportional to the force acting on the cable 54. The control board, by means of the actual reading detected by the sensor 52 of modification of the magnetic field determined by the displacement of the V-shaped recess 51, produces the displacement of the hollow shaft 41 and therefore the tension on the cable 54.

Figure 5 shows a position of the parts when instead activation of the cable 54 occurs during operation thereof. In fact, this figure shows an enlarged detail of that shown in Figure 1 in a situation where the Bowden cable 54 is operated by the system, with displacement of the ferromagnetic shaft 41 which allows the reading of the force exerted by the cable 54.

By so doing, this implements a particular method of controlling a pull cable (for example a parking brake of a motor vehicle, such as an agricultural vehicle) provided according to the invention.

In fact, such a control method (for example for controlling a parking brake of a motor vehicle such as an agricultural vehicle) comprises the steps of:
providing a motor (21) engaged with a reducer (20) connected to a hollow shaft (41) connected to a cable (54), a position sensor (52) and a control board;
detecting a first position of the hollow shaft (41) by means of the position sensor (52);
displacing the cable (54) by means of activation of the motor (21);
detecting a second position of the hollow shaft (41) by means of the position sensor (52);
calculating the relative displacement of the hollow shaft (41) from the first position to the second position in order to determine the tension exerted on the cable (54).

More particularly, such a method according to the present invention comprises the step whereby said displacement takes into account the fact that said displacement of said hollow shaft (41) is proportional according to the law of deformation of Belleville springs (47) which are arranged coaxially around said hollow shaft (41) and which in the rest position of the system are not stressed.

The embodiment described above and shown by way of example is one of the embodiments which identify a system for controlling a gearmotor which acts for example on the cable of a parking brake of a motor vehicle, such as an agricultural vehicle, able to overcome the aforementioned drawbacks of the prior art in an extremely simple, low-cost and particularly functional manner.

Furthermore, a system according to the invention, for example for controlling a gearmotor acting on the cable of a parking brake of a motor vehicle, such as an agricultural vehicle according to the present invention, is particularly simple, with a number of parts which is reduced to a minimum and with low manufacturing costs.

Furthermore it is pointed out that a system according to the invention, for example for controlling a gearmotor which acts on the cable of a parking brake of a motor vehicle, such as an agricultural vehicle, is applicable in a simple manner and ensures a certain degree of uniformity and reliability during operation thereof.

Advantageously, the arrangement provided according to the present invention allows distribution of the radial, internal, constraining reactions between the moving parts and the supports, which are perfectly balanced, of a limited magnitude and not subject to collateral moments or axial reactions.

The advantage of the present invention compared to the known systems present today on the market is the direct reading of the load acting on the cable owing to the presence of the sensor 52, the V-shaped recess 51 formed on the hollow shaft 41 and the springs 47 which react in accordance with a given loading law.

In the systems which are available on the market, the reading operation is indirect, namely the power consumption parameters of the electric motor are read and converted into a load acting on the cable.

In these systems, in fact, a motor failure or reducer blockage results in a power consumption reading which in reality does not generate a load on the cable. This therefore gives rise to a false reading of problems not associated with the cable and its tension.

Differently and advantageously, according to the present invention, with this novel and original system, the reading is direct and is not influenced by problems or failures of the motor or the reducer.

The object mentioned in the preamble of the description is thus achieved. The scope of protection of the present invention is defined by the attached claims.

## Claims

1. Actuator system comprising:
a housing (20) containing an electric motor (21) and a reducer group (22) connected downstream of the electric motor (21);
a hollow shaft (41) connected to the reducer group and displaceable longitudinally inside said housing (20);
a cable (54) to be operated, connected to the hollow shaft (41);
**characterized in that** the system furthermore comprises:
a position sensor (52), which is located fixed inside the housing (20) and arranged facing said hollow shaft (41) for measuring a displacement of said hollow shaft (41).

2. System according to Claim 1, wherein said output reducer group (21) comprises a shaft extension (33) which engages rotatably with a disc arrangement (32) inside which in turn a first end of the hollow shaft (41) is rotationally, but not displaceably, constrained.

3. System according to Claim 1, wherein said hollow shaft (41) at a second end thereof has an internal female threading (43) inside which a matching screw (53) connected to the cable (54) is arranged.

4. System according to any one of the preceding claims, wherein the system is a system for controlling the parking brake of a motor vehicle, such as an agricultural vehicle, and the cable (54) is a cable of the parking brake of the motor vehicle.

5. System according to any one of the preceding claims, wherein said hollow shaft (41) has, in an intermediate portion thereof, a cam-shaped surface (51) which extends annularly around it and which faces the position sensor (52) arranged fixed inside the housing (20).

6. System according to Claim 5, wherein said cam-shaped surface (51) which extends annularly around said hollow shaft (41) has a central open V shaped recess.

7. System according to one or more of the preceding Claims 1 to 6, wherein on the outside of said hollow shaft (41) there are provided oppositely arranged Belleville springs (47) which in the rest position of the system are not stressed, are arranged abutting in between two washers (48, 49) and keep the cable (54) tensioned.

8. System according to Claim 7, wherein said displacement of said hollow shaft (41) with respect to said position sensor (52) is proportional in accordance with the law of deformation of said Belleville springs (47).

9. System according to Claim 7 or 8, wherein said hollow shaft (41) has an outer threaded portion on which there is arranged a nut (50) which completes the arrangements of parts around said hollow shaft (41), forming a locating element for positioning the washers (48, 49) and the Belleville springs (47).

10. System according to one or more of the preceding Claims 1 to 9, wherein said hollow shaft (41) is externally supported axially by a pair of flanged bushes (44) arranged inside said housing (20).

11. Method for controlling an actuator system for a cable (54) to be operated, comprising the following steps:
providing a motor (21) engaged with a reducer (20) connected to a hollow shaft (41) connected to the cable (54), a position sensor (52) and a control board;
detecting a first portion of the hollow shaft (41) by means of the position sensor (52);
displacing the cable (54) by means of activation of the motor (21);
detecting a second position of the hollow shaft (41) by means of the position sensor (52);
calculating the relative displacement of the hollow shaft (41) from the first position to the second position in order to determine the tension exerted on the cable (54).

12. Method according to Claim 11, wherein the step of calculating said displacement takes into account the fact that said displacement of said hollow shaft (41) is proportional in accordance with the law of deformation of Belleville springs (47) which are arranged coaxially around said hollow shaft (41) and which in the rest position of the system are not stressed.

13. Method according to Claim 11, wherein said method is a method for controlling a parking brake of a motor vehicle, such as an agricultural vehicle, and the cable (54) is the cable of the brake.
